(19) Europäisches Patentamt European Patent Office Office européen des brevets

(11) **EP 4 549 995 A1**

(12) **EUROPEAN PATENT APPLICATION**
published in accordance with Art. 153(4) EPC

(43) Date of publication:
07.05.2025 Bulletin 2025/19

(21) Application number: 23829417.7

(22) Date of filing: 17.02.2023

(51) International Patent Classification (IPC):
*G01S 7/48* (2006.01)

(52) Cooperative Patent Classification (CPC):
G01S 7/48; Y02A 90/10

(86) International application number:
PCT/CN2023/077001

(87) International publication number:
WO 2024/001224 (04.01.2024 Gazette 2024/01)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 01.07.2022 CN 202210765357

(71) Applicant: Hesai Technology Co., Ltd.
Shanghai 201815 (CN)

(72) Inventors:
• LI, Kangping
  Shanghai 201815 (CN)
• SHI, Congbo
  Shanghai 201815 (CN)
• ZENG, Zhaoming
  Shanghai 201815 (CN)
• XIANG, Shaoqing
  Shanghai 201815 (CN)

(74) Representative: **Fish & Richardson P.C.**
**Highlight Business Towers**
**Mies-van-der-Rohe-Straße 8**
**80807 München (DE)**

(54) **ECHO SIGNAL CHECKING METHOD AND SYSTEM BASED ON DYNAMIC THRESHOLD VALUE, AND LIDAR**

(57) This disclosure provides a dynamic threshold based echo signal detection method and system, and a LiDAR. The method includes: determining at least one feature parameter that represents a working condition of the LiDAR; determining an echo signal collected by the LiDAR, where the echo signal includes at least a noise signal; selecting a processing mode for the echo signal based on the at least one feature parameter, detecting the noise signal in the processing mode, and adjusting a detection threshold; and comparing the echo signal with the detection threshold, and outputting a target signal reflected from a target object in the echo signal. According to the echo signal detection method and system, and the LiDAR, the detection threshold can be determined based on the feature parameter and the noise signal of the LiDAR, and methods for determining the detection threshold in different modes may be selected under different feature parameters to improve the accuracy of the detection threshold for the echo signal, thereby improving the detection probability and accuracy of echo signal detection.

**P100**

Determine at least one feature parameter of LiDAR, at least one feature parameter representing working condition of LiDAR — S120

Determine echo signal collected by LiDAR, echo signal including at least noise signal — S140

Generate detection threshold based on at least one feature parameter and noise signal — S160

Compare echo signal with detection threshold, and output target signal reflected from target object in echo signal — S180

Fig. 2

EP 4 549 995 A1

## Description

### TECHNICAL FIELD

This disclosure relates to the field of LiDARs and, in particular, to dynamic threshold based echo signal detection methods and systems, and LiDARs.

### BACKGROUND

As an active sensor that senses the surrounding environment by emitting a laser beam, LiDAR is mainly used in the field of autonomous vehicle environment perception, robot environment perception, unmanned aerial vehicle surveying and mapping, or the like. The basic task of the LiDAR is to detect surrounding target objects and measure their distance and spatial coordinates.

Typically, echo signals collected by the LiDAR are always mixed with various types of noise signals. In such a case, it can be beneficial for detecting the echo signals from the LiDAR to detect target signals reflected from the target objects in the echo signals, and the distance and spatial coordinates of the target objects can be calculated based on the target signals.

In the prior art, echo signal detection can be carried out mainly by setting a detection threshold. When the echo signal is greater than the threshold, it can be determined that the echo signal is the target signal, otherwise, it can be determined that the echo signal is not the target signal. Various types of noise signals have random characteristics, and the fixed threshold cannot be adjusted based on changes in the various types of noise signals, resulting in low accuracy of echo signal detection.

In such a case, a dynamic threshold based echo signal detection method and system with higher detection accuracy, and a LiDAR can be beneficial.

### SUMMARY

This disclosure provides a dynamic threshold based echo signal detection method and system with higher accuracy, and a LiDAR.

In a first aspect, this disclosure provides a dynamic threshold based echo signal detection method. The method is applied to a LiDAR. The method includes: determining at least one feature parameter that represents a working condition of the LiDAR; determining an echo signal collected by the LiDAR, the echo signal including at least a noise signal; selecting a processing mode for the echo signal based on the at least one feature parameter, detecting the noise signal in the processing mode, and adjusting a detection threshold; and comparing the echo signal with the detection threshold, and outputting a target signal reflected from a target object in the echo signal.

In some embodiments, the at least one feature parameter includes at least one of a perpendicular direction detection angle, a detection distance, or a sampling rate.

In some embodiments, the selecting a processing mode for the echo signal based on the at least one feature parameter, detecting the noise signal in the processing mode, and adjusting a detection threshold includes: determining a mean value of the noise signal; selecting one of a preset first mode or second mode as a target mode based on the at least one feature parameter; determining a standard deviation of the noise signal based on the target mode; and generating the detection threshold based on the mean value and the standard deviation of the noise signal.

In some embodiments, the first mode includes: sampling the echo signal at a first speed to determine multiple first sampling points; setting a length and a moving step length of a target window, and moving the target window by the moving step length to sequentially perform signal processing on the multiple first sampling points to determine feature information of the first sampling point in each target window; filtering the target signal in the echo signal based on the feature information to determine the noise signal; and determining the standard deviation of the noise signal.

In some embodiments, the feature information includes statistical information of amplitude information. The statistical information of the amplitude information includes at least one of a mean value, an entropy, a variance, a standard deviation, or a standard deviation of the standard deviation of the amplitude information.

In some embodiments, the filtering the target signal in the echo signal based on the feature information to determine the noise signal includes: determining, as the target signal, a first sampling point in the target window where the feature information exceeds a preset first threshold range; and removing the target signal from the echo signal to determine the noise signal.

In some embodiments, the determining the standard deviation of the noise signal includes: determining a standard deviation of the first sampling point in each target window corresponding to the noise signal; and using a standard deviation involving a maximum number of target windows as the standard deviation of the noise signal.

In some embodiments, the second mode includes: sampling the echo signal at a second speed to determine multiple second sampling points; determining the target signal in the multiple second sampling points based on a preset second threshold range, and filtering the target signal in the echo signal to determine the noise signal; and determining the standard deviation of the noise signal.

In some embodiments, the determining the target signal in the multiple second sampling points based on a preset second threshold range includes: determining a second sampling point outside the second threshold range as the target signal.

In some embodiments, the second threshold range has a second threshold upper limit and a second threshold lower limit. The determining the target signal in the multiple second sampling points based on a preset second threshold range further includes: determining at least one second sampling point within the second threshold range and adjacent to a second sampling point of the second threshold upper limit as the target signal.

In some embodiments, the second threshold range has a second threshold upper limit and a second threshold lower limit. The determining the target signal in the multiple second sampling points based on a preset second threshold range further includes: determining, as the target signal, multiple continuous second sampling points that monotonically increase within the second threshold range and are adjacent to a second sampling point of the second threshold lower limit.

In some embodiments, the determining the standard deviation of the noise signal includes: using a standard deviation of a second sampling point corresponding to the noise signal as the standard deviation of the noise signal.

In some embodiments, the selecting one of a preset first mode or second mode as a target mode based on the at least one feature parameter includes: when it is determined that the at least one feature parameter meets a first preset condition, using the first mode as the target mode; or when it is determined that the at least one feature parameter does not meet the first preset condition, using the second mode as the target mode. The first preset condition includes at least one of the following situations: the perpendicular direction detection angle corresponding to the echo signal is within an angle threshold range; a current detectable distance of the LiDAR exceeds a distance threshold; or the sampling rate of the echo signal exceeds a sampling rate threshold.

In some embodiments, the generating the detection threshold based on the mean value and the standard deviation of the noise signal includes: determining the detection threshold based on the mean value and the standard deviation of the noise signal, and a preset false alarm probability so that a probability that the noise signal exceeds the detection threshold is less than the false alarm probability.

In some embodiments, the at least one feature parameter further includes a working environment parameter that represents a state of an environment where the LiDAR is located during operation.

In some embodiments, the selecting a processing mode for the echo signal based on the at least one feature parameter, detecting the noise signal in the processing mode, and adjusting a detection threshold further includes: determining a detection threshold level corresponding to the working environment parameter based on the working environment parameter, to determine a false alarm probability corresponding to the detection threshold level.

In some embodiments, the determining a mean value of the noise signal includes: determining a mean value of the first sampling point in each target window corresponding to the noise signal; and using a mean value involving a maximum number of target windows as the mean value of the noise signal.

In some embodiments, the determining a mean value of the noise signal includes: determining the mean value of the noise signal in each detection channel separately; and using an average value of mean values of noise signals in all detection channels in a same column/row as a mean value of the noise signals in all the detection channels in the current column.

In some embodiments, the comparing the echo signal with the detection threshold, and outputting a target signal reflected from a target object in the echo signal includes: using a signal in the echo signal that exceeds the detection threshold as the target signal and outputting the signal.

In a second aspect, this disclosure further provides a dynamic threshold based echo signal detection system. The system includes at least one storage medium and at least one processor. The at least one storage medium stores at least one instruction set for detecting an echo signal based on a dynamic threshold. The at least one processor is communicatively connected to the at least one storage medium. When the dynamic threshold based echo signal detection system operates, the at least one processor reads the at least one instruction set and implements the dynamic threshold based echo signal detection method in the first aspect of this disclosure.

In a third aspect, this disclosure further provides a LiDAR. The LiDAR includes a laser emitter, a laser receiver, and a dynamic threshold based echo signal detection system. The laser emitter emits a laser signal outwards during operation. The laser receiver receives an echo signal reflected from a target object during operation. The echo signal includes a noise signal. The dynamic threshold based echo signal detection system is communicatively connected to the laser receiver during operation and implements the dynamic threshold based echo signal detection method in the first aspect of this disclosure.

It can be seen from the above technical solution that according to the dynamic threshold based echo signal detection method and system, and the LiDAR, the detection threshold can be determined based on the feature parameter and the noise signal of the LiDAR, and methods for determining the detection threshold in different modes may be selected under different feature parameters to improve the accuracy of the detection threshold for the echo signal. In such a case, the detection probability and accuracy of echo signal detection can be improved.

Other functions of the dynamic threshold based echo signal detection method and system, and the LiDAR provided in this disclosure will be listed in the following description. According to the description, the content introduced by the following numbers and examples will be clear to those of ordinary skill in the art. The creative aspects of the dynamic threshold based echo signal detection method and system, and the LiDAR provided in this disclosure can be fully explained through practicing or using the methods, apparatuses, and combinations described in the following detailed examples.

## BRIEF DESCRIPTION OF DRAWINGS

To more clearly illustrate the technical solutions in the embodiments of this disclosure, the accompanying drawings that need to be used in the embodiments will be briefly introduced below. Clearly, the accompanying drawings in the description below merely illustrate some embodiments of this disclosure. Those of ordinary skill in the art may also derive other accompanying drawings from these accompanying drawings without creative efforts.

Fig. 1 shows a schematic structural diagram of an example LiDAR, consistent with some embodiments of this disclosure.

Fig. 2 shows an exemplary flowchart of an example dynamic threshold based echo signal detection method, consistent with some embodiments of this disclosure.

Fig. 3 shows an exemplary flowchart of an example method for generating a detection threshold, consistent with some embodiments of this disclosure.

Fig. 4 shows a schematic working diagram of an example first mode, consistent with some embodiments of this disclosure.

Fig. 5 shows a schematic diagram of an example echo signal, consistent with some embodiments of this disclosure.

Fig. 6 shows a schematic diagram of an example distribution histogram of standard deviations, consistent with some embodiments of this disclosure.

Fig. 7 shows a schematic working diagram of an example second mode, consistent with some embodiments of this disclosure.

Fig. 8 shows a schematic diagram of an example second sampling point, consistent with some embodiments of this disclosure.

Fig. 9 shows a schematic diagram of an example threshold calibration, consistent with some embodiments of this disclosure.

Fig. 10 shows an exemplary schematic hardware diagram of an example system for detecting an echo signal, consistent with some embodiments of this disclosure.

Fig. 11 shows a schematic diagram of an example first module, consistent with some embodiments of this disclosure.

Fig. 12 shows a schematic diagram of an example second module, consistent with some embodiments of this disclosure.

## DESCRIPTION OF EMBODIMENTS

The following description provides certain application scenarios and requirements of this disclosure to enable those skilled in the art to create and use the content in this disclosure. Various partial modifications to the disclosed embodiments are clear to those skilled in the art, and the general processes defined herein may be applied to other embodiments and applications without departing from the scope of this disclosure. In such a case, this disclosure is not limited to the shown embodiments and falls within the widest scope consistent with that of the claims.

The terms used herein are only used to describe specific exemplary embodiments and are not restrictive. For example, singular forms "a/an," "one," and "the" used here may also include plural forms, unless otherwise explicitly stated in the context. When used in this disclosure, at least one of the terms "comprise," "include," or "contain" means the presence of at least one of associated integers, steps, operations, elements, or components, but do not exclude the presence of at least one of one or more other features, integers, steps, operations, elements, components, or groups, or the addition of at least one of other features, integers, steps, operations, elements, components, or groups in the system/method.

Considering the following description, these and other features of this disclosure, operations and functions of related elements of the structure, and the combination and manufacturing economy of the components may be significantly improved. Referring to the accompanying drawings, all of these form a part of this disclosure. However, it should be clearly understood that the accompanying drawings are merely for illustrative and descriptive purposes and are not intended to limit the scope of this disclosure. It should also be understood that the accompanying drawings are not drawn to scale.

The flowchart used in this disclosure shows the operations implemented by the system according to some embodiments in this disclosure. It should be clearly understood that the operations in the flowchart may not be implemented in order. Rather, the operations may be implemented in reverse order or simultaneously. In addition, one or more other operations may be added to the flowchart. One or more operations may be removed from the flowchart.

For the convenience of presentation, first of all, the following explanations are given for the terms that may occur in the following description.

Echo signal detection: a method for detecting whether a valid signal exists in received signals. In the technical field of LiDAR, an echo signal received by a LiDAR typically carries a noise signal and an interference signal. Echo signal detection refers to detecting a target signal reflected from a target object in the echo signal received by the LiDAR.

Threshold: a threshold for determining a target signal in LiDAR echo signal detection. A signal with an amplitude exceeding the threshold is a target signal, and a signal with an amplitude less than the threshold is a noise signal.

False alarm probability: it may also be referred to as a noise rate, and it is a probability of detecting a noise signal as a target signal. The value of a threshold is related to the false alarm probability.

False dismissal probability: a probability of detecting a target echo signal as a noise signal. The value of a threshold is related to the false dismissal probability.

Correct detection probability: a probability of correctly detecting a target signal. A sum of the correct detection probability and the false dismissal probability is 1.

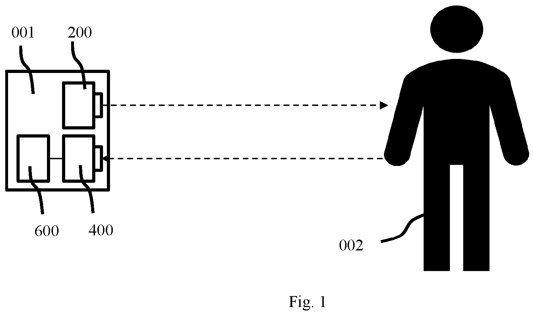

Fig. 1 shows a schematic structural diagram of an example LiDAR 001, consistent with some embodiments of this disclosure. The LiDAR 001 is a LiDAR system that detects a position, a velocity, or other characteristic parameters of a target object 002 by emitting a laser beam. Its working process is that a detection signal (e.g., a laser beam) is emitted to the target object, then a received echo signal reflected from the target object is compared with the emitted signal, and after certain processing, information related to the target object, such as a distance, an orientation, a height, a velocity, an attitude, even shape, or other parameters of the target object relative to the LiDAR 001, can be determined to detect, track, or identify the target object. The LiDAR 001 can emit a laser signal outwards during operation and receive the echo signal reflected from the target object to generate point cloud data. A frame of point cloud data may include multiple pieces of laser point data. Each piece of laser point data contains three-dimensional coordinate information of X, Y, and Z. The target object 002 may be any form of object around the LiDAR 001. For example, in an autonomous driving scene, the target object 002 may be a vehicle, a building, a pedestrian, or the like around the LiDAR 001. For another example, in a 3D scanning scene, the target object 002 may be any form of a building in the scene where the LiDAR 001 is located. As shown in Fig. 1, the LiDAR 001 may include a laser emitter 200, a laser receiver 400, and an echo signal detection system 600.

The laser emitter 200 can periodically emit a laser signal outwards during operation. Based on the number of laser signal beams, the LiDAR 001 may typically be classified into 8/16/32/64/128-line LiDARs or the like. One or more laser beams are emitted at different angles in a vertical direction and scanned in a horizontal direction to achieve detection of a three-dimensional contour of a target area. As multiple detection channels (beams) are equivalent to scanning planes with multiple inclination angles, the more the laser signal beams in a perpendicular field of view are, the higher the angular resolution in the vertical direction is, and the higher the point cloud density is.

In some embodiments, the laser signal emitted from the laser emitter 200 is a narrow pulse signal. In some embodiments, the pulse width of the narrow pulse signal is within 10 ns, such as 10 ns, 8 ns, 6 ns, 4 ns, or 2 ns. It can be understood by those skilled in the art that the pulse width of the narrow pulse signal of above 10 ns, such as 12 ns, 14 ns, or 16 ns, is also within the scope of protection of this disclosure. For the convenience of presentation, an example where the laser signal emitted from the laser emitter 200 is the narrow pulse signal will be used for description in the following description. When the laser signal emitted from the laser emitter 200 is the narrow pulse signal, echo signal detection may be detection of the narrow pulse signal in the echo signal.

The laser receiver 400 can receive a reflected signal from the target object 002 in response to the laser signal during operation. For ease of description, the reflected signal from the target object 002 in response to the laser signal emitted from the laser emitter 200 is defined as a target signal. After encountering the target object 002, the laser signal is diffusely reflected by the target object 002 to form the target signal, and the target signal is received by the laser receiver 400. In some embodiments, the laser receiver 400 can not only receive the target signal, but also receive a noise signal. For ease of description, the signal received by the laser emitter 400 is defined as an echo signal. The echo signal may include the target signal and the noise signal. The target signal is typically referred to as a useful signal or an effective signal, which can be configured to position and track the target object 002. In some embodiments, the noise signal may include internal noise of the laser receiver 400 and external environmental noise thereof. In some embodiments, the noise signal may also include a clutter signal and an interference signal. The clutter signals may be unwanted echoes in the natural environment, that is, the clutter signals may be echo signals scattered by various "unwanted" objects and objectively existing in a propagation path, such as echoes from plants, oceans, weathers (especially rain, snow, and fog), and bird flocks. The interference signal refers to the impact of electromagnetic waves emitted during human activities on the laser receiver 400, or sunlight interference.

The echo signal detection system 600 may store data or instructions for executing the dynamic threshold based echo signal detection method described in this disclosure, and may execute or be configured to execute at least one of the data or the instructions. The echo signal detection system 600 may include a hardware device with a data information processing function and a program necessary for driving the hardware device to work. Certainly, the echo signal detection system 600 may also be just a hardware device with a data processing capability, or just a program running in the hardware device. The echo signal detection system 600 may be communicatively connected to the laser receiver 400 during operation. The echo signal detection system 600 may determine the echo signal from the laser receiver 400 and detect the echo signal based on the dynamic threshold based echo signal detection method described in this disclosure to detect the target signal therein during operation.

The communication connection refers to any form of connection that can directly or indirectly receive information. In some embodiments, the echo signal detection system 600 and the laser receiver 400 may be communicatively connected to transmit data to each other. In some embodiments, the echo signal detection system 600 and the laser receiver 400 may also be electrically connected to transmit data to each other. In some embodiments, the echo signal detection system 600 may also be directly connected to another circuit by an electrical wire to establish an indirect connection with the laser receiver 400. The echo signal detection system and the laser receiver can transmit data to each other. The wireless communication connection may be a network connection, a Bluetooth connection, an NFC connection, or the like.

In some embodiments, the echo signal detection system 600 may be local or remote. In some embodiments, the echo signal detection system 600 may be executed on a cloud platform. In some embodiments, the echo signal detection system 600 may access the data in the laser receiver 400 through a network. In some embodiments, the echo signal detection system 600 may be directly connected to the laser receiver 400 to access the data therein.

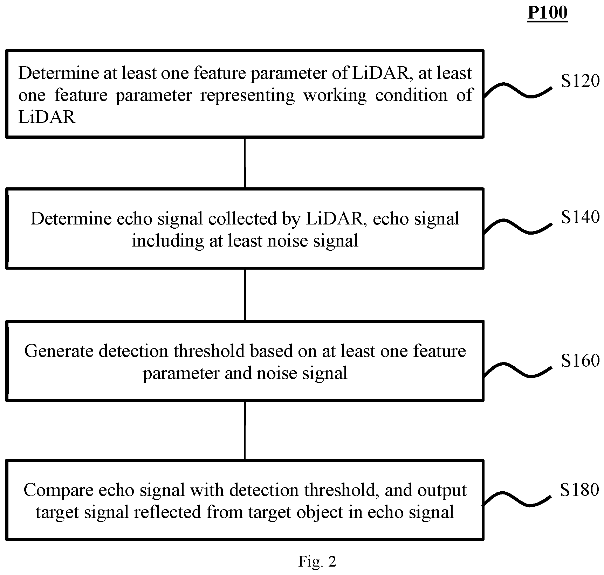

Fig. 2 shows an exemplary flowchart of an example dynamic threshold based echo signal detection method P100, consistent with some embodiments of this disclosure. As previously mentioned, the echo signal detection system 600 may execute the dynamic threshold based echo signal detection method P100 according to this disclosure. In some embodiments, the laser emitter 200 of the LiDAR 001 may include multiple detection channels. The multiple detection channels may emit laser signals at multiple angles in a perpendicular direction. The laser receiver 400 may also receive echo signals from the multiple detection channels. The echo signal detection system 600 may execute the method P100 on the echo signal in at least one of the multiple detection channels. As shown in Fig. 2, the method P100 may include the following steps.

At 120, at least one feature parameter of a LiDAR 001 is determined.

The at least one feature parameter may represent a working condition of the LiDAR 001. In some embodiments, the working condition of the LiDAR 001 may be a working parameter or a working state of the LiDAR 001. At this time, the at least one feature parameter may include at least one of a perpendicular direction detection angle, a detection distance, or a sampling rate.

As previously mentioned, in some embodiments, the laser emitter 200 of the LiDAR 001 may include multiple detection channels. The multiple detection channels may emit laser signals at multiple angles in the perpendicular direction. The detection angles of different detection channels in the perpendicular direction are different. In some embodiments, for an upper or lower detection channel, a perpendicular direction detection angle is large. The detection channel is equivalent to a detection channel for measuring a sky/ground angle. An actual detection distance is short. The detection channel is equivalent to a short-range detection channel. At this time, the flight time for the laser emitter 200 to emit laser light once is short. For a middle detection channel, a perpendicular direction detection angle is small, and an actual detection distance is long. The detection channel is equivalent to a long-range detection channel. At this time, the flight time for the laser emitter 200 to emit laser light once is long.

The detection distance may be a maximum detection distance of the LiDAR 001. The detection distance may be set and changed. When the detection distance of the LiDAR 001 is long, the flight time for the laser emitter 200 to emit laser light once is long. When the detection distance of the LiDAR 001 is short, the flight time for the laser emitter 200 to emit laser light once is short.

The sampling rate may be the number of times preset by a signal collector (e.g., an analog-to-digital converter) to sample per unit time. When the sampling rate is high, there are a large number of sampling points in the same time. When the sampling rate is low, there are a small number of sampling points in the same time.

When the sampling rate is fixed, the longer the detection distance of the LiDAR 001 is, the longer the flight time for the laser emitter 200 to emit laser light once is, and the larger the number of sampling points collected by the laser receiver 400 is. When the detection distance of LiDAR 001 is fixed, the higher the sampling rate of the LiDAR 001, and the larger the number of sampling points collected by the laser receiver 400 is.

In some embodiments, the working condition of the LiDAR 001 may be a state of an environment where the LiDAR 001 is located during operation. At this time, the at least one feature parameter may also include a working environment parameter. The environmental state may be a weather condition of the environment where the LiDAR 001 is located during operation, such as a dust index, a rain and snow index, or air humidity. The working environment parameter may be an indicator for evaluating the environmental state. For example, the dust index is configured to evaluate a dust indicator. The higher the dust index is, the higher the dust concentration is. For another example, the rain and snow index is configured to evaluate a rain and snow indicator. The higher the rain and snow index is, the higher the rain and snow concentration is. The higher the dust concentration, the rain and snow concentration, and the air humidity in the environment are, the greater the proportion of noise in the echo signal may be. The larger the working environment parameter is, the more severe the weather condition in the working environment is, and the greater the proportion of the noise signal in the echo signal is. At this time, the increase of a detection threshold level to improve the detection accuracy can be beneficial. In such a case, it can be beneficial for the echo signal detection system 600 to set the detection threshold level based on the working environment parameter to adjust the detection threshold level based on different environments. The detection accuracy can be improved. The detection threshold level is negatively correlated with the false alarm probability. That is, the higher the false alarm probability is, the lower the detection threshold level is; or the lower the false alarm probability is, the higher the detection threshold level is. When the noise signal is determined, the higher the detection threshold level is, the higher the detection threshold is, the lower the corresponding false alarm probability is, and the lower the probability of detecting the noise signal as the target signal is; or the lower the detection threshold level is, the lower the detection threshold is, the higher the corresponding false alarm probability is, and the higher the probability of detecting the noise signal as the target signal is. The working environment parameter may be positively correlated with the detection threshold level. That is, the larger the working environment parameter is, the higher the detection threshold level is, the lower the false alarm probability is, and the lower the probability of detecting the noise signal as the target signal is; or the smaller the working environment parameter is, the lower the detection threshold level is, the higher the false alarm probability is, and the higher the probability of detecting the noise signal as the target signal is.

As shown in Fig. 2, the method P100 may further include the following steps.

At 140, an echo signal collected by the LiDAR 001 is determined.

As previously mentioned, the echo signal may include at least a noise signal. In some embodiments, the noise signal satisfies a normal distribution $N \sim (\mu, \sigma^2)$. $\mu$ is a mean value of the noise signal, and $\sigma$ is a standard deviation of the noise signal. For ease of description, in the method P100, calculation may be made based on the echo signal received within the flight time for the LiDAR 001 to detect emitted light once.

At 160, a processing mode for the echo signal is selected based on the at least one feature parameter, the noise signal is detected in the processing mode, and a detection threshold is adjusted.

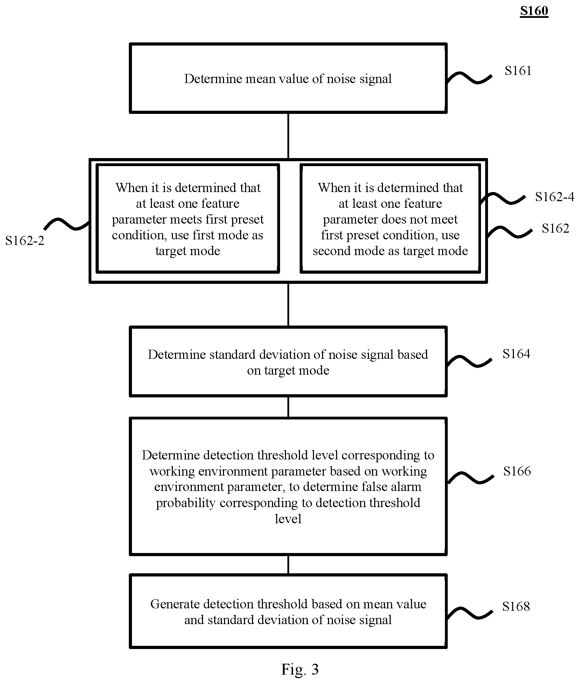

Fig. 3 shows an exemplary flowchart of an example method for generating a detection threshold, consistent with some embodiments of this disclosure. Fig. 3 shows a step 160. Specifically, step 160 may include the following steps.

At 161, a mean value of the noise signal is determined.

In some embodiments, the noise signal is fluctuating, and the mean value of the noise signal may be updated and determined in real time. At this time, real-time update and determination of a mean value of each channel in a same column/row can be beneficial. In some embodiments, in step 161, the mean value of the noise signal may be determined based on a sliding window. For example, the echo signal is sampled, and the sampling points are divided into multiple target windows by means of the sliding window; the target window corresponding to the target signal is filtered; and a mean value of a first sampling point in each of the remaining target windows corresponding to the noise signal is determined, and a mean value involving a maximum number of target windows is used as the mean value of the noise signal. At this time, the determination of the mean value may be synchronized with the determination of the standard deviation.

In some embodiments, the noise signal in the channel in the same column/row has small fluctuation and small mean value deviation, real-time determination of the mean value is not beneficial. At this time, mean values of noise signals in all channels in the same column/row may be identical. At this time, step 161 may include: determining the mean value of the noise signal in each detection channel separately; and using an average value of mean values of noise signals in all detection channels in a same column/row as a mean value of the noise signals in all the detection channels in the current column. In some embodiments, when the mean value of each detection channel is calculated, it is possible to sample the echo signal, filter the sampling point corresponding to the target signal, and count a mean value of the remaining sampling points as the mean value of the noise signal. In some embodiments, a filtering threshold can be set to filter the sampling point corresponding to the target signal. For example, positive and negative filtering threshold lines can be set to determine that the sampling points that exceed the threshold lines are not noise signals. In some embodiments, when a slope of any two of three continuous sampling points is greater than a certain value, the three sampling points are all filtered.

As the real-time performance is not beneficial, the mean value is only affected by a temperature. In such a case, the mean value of the channel in the same column/row may also be averaged for multiple times to reduce errors. Specifically, it is possible to determine the mean value of each channel in the same column/row and use the average value of the mean values of all the channels as the mean value of the noise signal in this channel. After all columns are calculated, a new round of mean value calculation begins.

At 162, one of a preset first mode 1 or second mode 2 is selected as a target mode based on the at least one feature parameter.

One of the preset first mode 1 or second mode 2 is selected as the target mode by considering whether the at least one feature parameter meets a first preset condition, which, specifically, is as follows. As shown in Fig. 3, step 162 may include one of the following steps.

At 162-2, when it is determined that the at least one feature parameter meets a first preset condition, the first mode is used as the target mode; or

At 162-4, when it is determined that the at least one feature parameter does not meet the first preset condition, the second mode is used as the target mode.

Specifically, in step 162, the echo signal detection system 600 may generate a corresponding control signal based on the at least one feature parameter, and select a mode corresponding to the control signal as the target mode based on the control signal. The control signal may include a first control signal or a second control signal. The first mode 1 corresponds to the first control signal, and the second mode 2 corresponds to the second control signal. The echo signal detection system 600 generates the first control signal after determining that the at least one feature parameter meets the first preset condition, and selects the first mode 1 as the target mode based on the first control signal. The echo signal detection system 600 generates the second control signal after determining that the at least one feature parameter does not meet the first preset condition, and selects the second mode 2 as the target mode based on the second control signal.

The first preset condition includes at least one of the following situations:

the perpendicular direction detection angle corresponding to the echo signal is within an angle threshold range;
a current detectable distance of the LiDAR 001 exceeds a distance threshold; and
the sampling rate of the LiDAR 001 exceeds a sampling rate threshold.

As previously mentioned, when the perpendicular direction detection angle corresponding to the detection channel is within the angle threshold range (e.g., the middle channels), the perpendicular direction detection angle of the detection channel is small, and the actual detection distance for the detection channel is long. The detection channel is equivalent to the long-range detection channel. At this time, the flight time for the laser emitter 200 to emit laser light once is long, and there is a larger number of sampling points collected by the laser receiver 400. At this time, to improve the detection accuracy, the echo signal detection system 600 may use the first mode 1 to determine a sufficient number of first sampling points to calculate the standard deviation of the noise signal. When the perpendicular direction detection angle corresponding to the detection channel is outside the angle threshold range (e.g., the upper or lower detection channel), the actual detection distance for the detection channel is short. The detection channel is equivalent to the short-range detection channel. At this time, the flight time for the laser emitter 200 to emit laser light once is short, and there is a limited number of sampling points collected by the laser receiver 400. At this time, to improve the detection accuracy, the echo signal detection system 600 may use the second mode 2 to calculate the standard deviation of the noise signal.

The angle threshold range may be determined based on an empirical value, a statistical experiment, or machine learning.

When the current detectable distance for the LiDAR 001 exceeds the distance threshold, which is equivalent to long-range detection, the flight time for the laser emitter 200 to emit laser light once is long, and there are also a large number of sampling points collected by the laser receiver 400. At this time, to improve the detection accuracy, the echo signal detection system 600 may use the first mode 1 to determine a sufficient number of first sampling points to calculate the standard deviation of the noise signal. When the detectable distance for the LiDAR 001 is within the distance threshold, which is equivalent to short-range detection, the flight time for the laser emitter 200 to emit laser light once is short, and there is a limited number of sampling points collected by the laser receiver 400. At this time, to improve the detection accuracy, the echo signal detection system 600 may use the second mode 2 to calculate the standard deviation of the noise signal. The distance threshold may be determined based on an empirical value, a statistical experiment, or machine learning. In some embodiments, the distance threshold may be a value or a value range. For example, the distance threshold may be 100 m, 150 m, or the like; and the distance threshold may be 100-150 m, or the like.

When the sampling rate exceeds the sampling rate threshold, there are a large number of sampling points in the echo signal received by the laser receiver 400 in the same time. At this time, the echo signal detection system 600 may use the first mode 1 to determine a sufficient number of first sampling points to calculate the standard deviation of the noise signal. When the sampling rate is less than the sampling rate threshold, there are a small number of sampling points in the echo signal received by the laser receiver 400 in the same time. At this time, to improve the detection accuracy, the echo signal detection system 600 may use the second mode 2 to calculate the standard deviation of the noise signal. The sampling rate threshold may be determined based on an empirical value, a statistical experiment, or machine learning. In some embodiments, the sampling rate threshold may be a value or a value range.

Through the above description, one of the first mode 1 and the second mode 2 may be selected as the target mode. In such a case, the target mode may be the first mode 1 or the second mode 2.

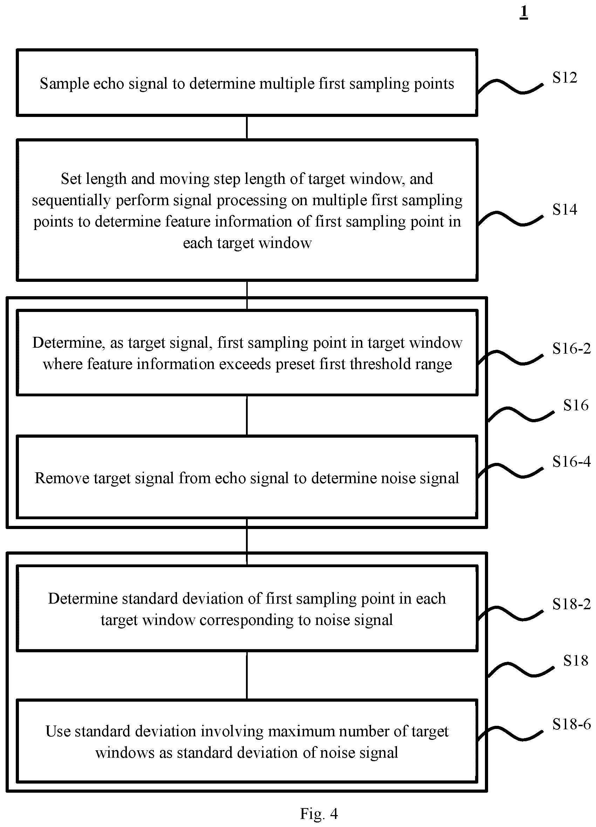

Fig. 4 shows a schematic working diagram of an example first mode 1, consistent with some embodiments of this disclosure. As shown in Fig. 4, the first mode 1 may include the following steps.

At 12, the echo signal is sampled to determine multiple first sampling points.

In step 12, the echo signal may be sampled based on an analog-to-digital converter (i.e., an A/D converter, "ADC" for short.) The ADC typically refers to an electronic component for generating a digital signal based on an analog signal. The typical ADC generates an outputted digital signal based on an inputted voltage signal. For ease of description, the sampling points generated in the first mode 1 are defined as the first sampling points. In some embodiments, in step 12, the echo signal may be sampled based on a first speed. The first speed may be a high speed. The high-speed ADC may be an ADC with a high sampling frequency, such as 500 MHz to 1GHz or even higher. The high-speed ADC may determine more sampling points per unit time and thus has higher sampling accuracy. Taking a 1 GHz high-speed ADC as an example, $10^9$ sampling points may be generated within 1s. Taking a propagation speed of the laser signal of $3 \times 10^8$ m/s as an example, when the detection distance for the LiDAR 001 is 200 m, the flight time for the LiDAR 001 to detect emitted light once from emitting of the laser signal to receiving of the echo signal is $1.33 \times 10^{-6}$s. At this time, the 1 GHz high-speed ADC may generate 1,330 sampling points within the time for the LiDAR 001 to detect emitted light once. When the detection distance for the LiDAR 001 is 100 m, the time for the LiDAR 001 to detect emitted light once from emitting of the laser signal to receiving of the echo signal is $0.67 \times 10^{-6}$ s. At this time, the 1 GHz high-speed ADC may generate 670 sampling points within the flight time for the LiDAR 001 to detect emitted light once.

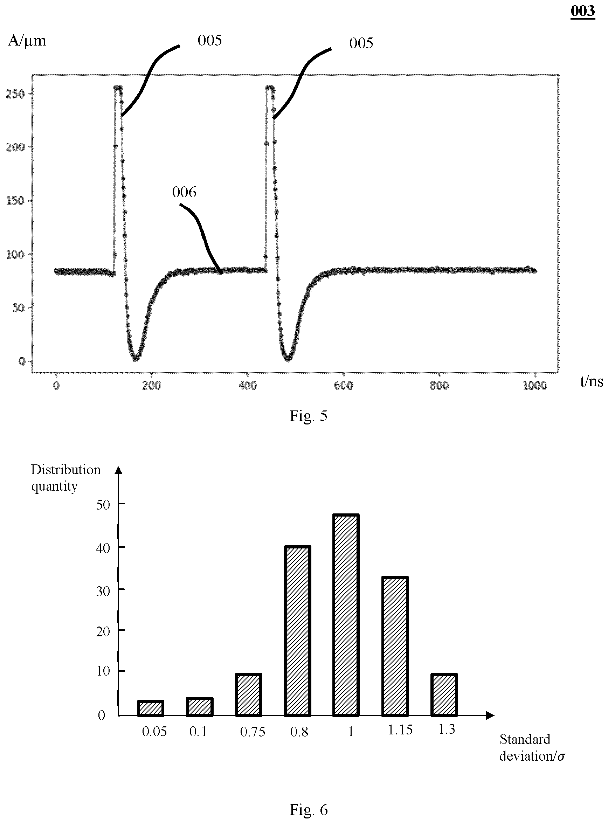

As previously mentioned, the echo signal may include the noise signal and the target signal. In such a case, the target signal actually exists in the multiple first sampling points. The value of the detection threshold is related to the noise signal. To determine the detection threshold, extraction of the noise signal from the echo signal can be beneficial. In some embodiments, the noise signal is typically a stationary signal, that is, a mean value and a variance of an amplitude of the noise signal within a certain period of time are stable or have small fluctuations. The pulse signal is a non-stationary signal. In such a case, there is a significant difference in amplitude information between the noise signal and the pulse signal in the target signal. Fig. 5 shows a schematic diagram of an example echo signal 003, consistent with some embodiments of this disclosure. As shown in Fig. 5, a horizontal axis represents time, and a vertical axis represents amplitude. The difference in amplitude information between the pulse signal 005 and the noise signal 006 is significant. Based on the amplitude information of the echo signal, the target signal may be removed from the echo signal to extract the noise signal and calculate the standard deviation of the noise signal.

As shown in Fig. 4, the first mode 1 may further include the following steps.

At 14, a length and a moving step length of a target window are set, and the target window is moved by the moving step length to sequentially perform signal processing on the multiple first sampling points to determine feature information of the first sampling point in each target window.

The feature information may include statistical information of amplitude information. The amplitude information may be an amplitude sampled by the first sampling point. The statistical information of the amplitude information may be a value determined by statistically calculating the amplitude of the first sampling point. The statistical information of the amplitude information may include at least one of a mean value, an entropy, a variance, a standard deviation, or a standard deviation of the standard deviation of the amplitude information. The entropy may be regarded as a measure of the degree of chaos in a system. The variance, the standard deviation, and the standard deviation of the standard deviation may be configured to evaluate a measure of the degree of data discretization.

The length and the moving step length of the target window may be time lengths. The length and the moving step length of the target window may be any numbers, and may be set based on practical application. For example, the length and the moving step length of the target window may be set corresponding to the horizontal axis in Fig. 5. In some embodiments, the echo signal detection system 600 may set the length and the moving step length of the target window based on empirical values. In some embodiments, the echo signal detection system 600 may set the length and the moving step length of the target window based on a statistical method. In some embodiments, the echo signal detection system 600 may set the length and the moving step length of the target window based on machine learning. In some embodiments, the echo signal detection system 600 may set the length and the moving step length of the target window based on the number of first sampling points. In some embodiments, to improve the detection accuracy, the number of target windows should not be less than a threshold M. For ease of description, the number of first sampling points collected within the flight time for the LiDAR 001 to detect emitted light once is defined as N, the number of first sampling points contained in one target window is defined as n, and the moving step length is defined as t first sampling points. In such a case, the number of target windows included within the flight time for the LiDAR 001 to detect emitted light once is

$$\frac{N-n}{t} \geq M$$

. The value of M may be determined based on an empirical value, a statistical method, or machine learning. In some embodiments, the length n of the target window may be less than the length of the pulse signal. In some embodiments, the moving step length t may also be less than the length of the pulse signal. In some embodiments, determination of the length n and the moving step length t of the target window based on set parameters of a processor 620 can be beneficial for computer recognition.

As shown in Fig. 4, the first mode 1 may further include the following steps.

At 16, the target signal in the echo signal is filtered based on the feature information to determine the noise signal. Specifically, step 16 may include the following steps.

At 16-2, a first sampling point in the target window where the feature information exceeds a preset first threshold range is determined as the target signal.

At 16-4, the target signal is removed from the echo signal to determine the noise signal.

The first threshold range may be pre-stored in the echo signal detection system 600. The first threshold range may be determined based on an empirical value, a statistical method, or machine learning. In some embodiments, the echo signal detection system 600 may pre-store amplitude information of the pulse signal, and the first threshold range may also be calculated based on the pulse signal. The first threshold range may be a definite threshold, a continuous threshold range, or multiple discontinuous threshold ranges. The first threshold range may correspond to the type of the feature information. That is, when the feature information is a mean value of the amplitude information, the first threshold range may be a mean value threshold range. When the feature information is a standard deviation of the amplitude information, the first threshold range may be a standard deviation threshold range. When the feature information is an entropy of the amplitude information, the first threshold range may be an entropy threshold range. When the feature information is a variance of the amplitude information, the first threshold range may be a variance threshold range. When the feature information is a standard deviation of the standard deviation of the amplitude information, the first threshold range may be a standard deviation threshold range of the standard deviation.

Taking a feature signal being the mean value of the amplitude information as an example, when the mean value of the amplitude information of the first sampling point in the target window differs significantly from the mean value threshold range (i.e., the mean value of the amplitude information of the first sampling point in the target window exceeds the mean value threshold range), it is determined that the first sampling point in the current target window is not the noise signal, and the first sampling point in the current target window is removed. Taking the feature signal being the standard deviation of the amplitude information as an example, when the standard deviation of the amplitude information of the first sampling point in the target window differs significantly from the standard deviation threshold range (i.e., the standard deviation of the amplitude information of the first sampling point in the target window exceeds the standard deviation threshold range), it is determined that the first sampling point in the current target window is not the noise signal, and the first sampling point in the current target window is removed.

In some embodiments, in step 16, a type of feature information may be selected for noise signal extraction. In some embodiments, in step 16, multiple types of feature information may be selected for noise signal extraction. When a type of feature information in the first sampling point corresponding to the target window exceeds the first threshold range, it is determined that the signal in the target window is not the noise signal.

As shown in Fig. 4, the first mode 1 may further include the following steps.

At 18, the standard deviation of the noise signal is determined. Specifically, step 18 may include the following steps.

At 18-2, a standard deviation of the first sampling point in each target window corresponding to the noise signal is determined.

At 18-6, a standard deviation involving a maximum number of target windows is used as the standard deviation of the noise signal.

In step 18, it is possible to determine standard deviations of first sampling points in multiple filtered target windows and generate a distribution histogram of the standard deviations based on calculation results of the standard deviations; and then the standard deviation involving the maximum number of target windows is used as the standard deviation of the noise signal. Fig. 6 shows a schematic diagram of an example distribution histogram of standard deviations, consistent with some embodiments of this disclosure. A horizontal axis represents a standard deviation, and a vertical axis represents a distribution quantity of target windows involved in each standard deviation.

In some embodiments, in step 18, other statistical methods, such as a curve graph, may also be used to determine a distribution result of the standard deviations. For ease of description, the standard deviation of the noise signal generated in the first mode 1 is marked as $\sigma_1$.

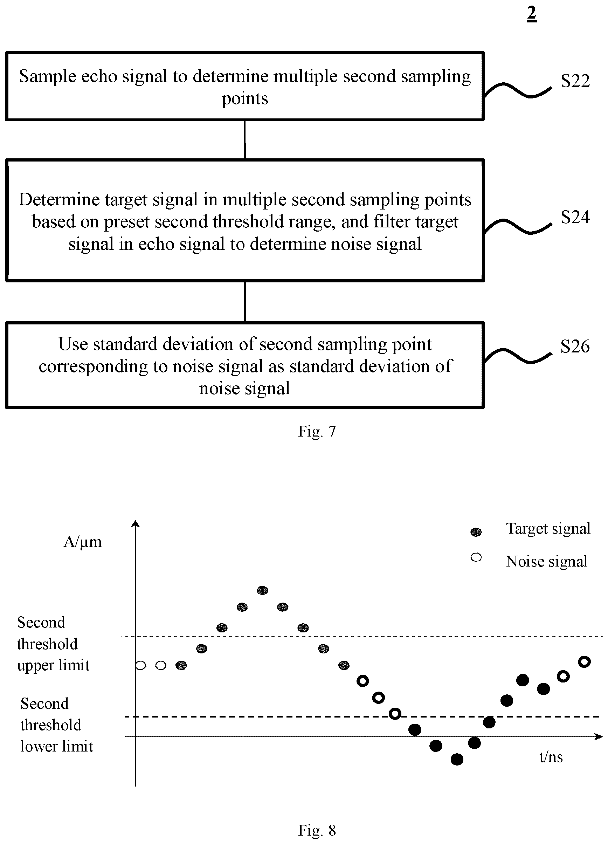

Fig. 7 shows a schematic working diagram of an example second mode 2, consistent with some embodiments of this disclosure. As shown in Fig. 7, the second mode 2 may include the following steps.

At 22, the echo signal is sampled to determine multiple second sampling points.

For ease of description, the sampling points generated in the second mode 2 are defined as the second sampling points. In step 22, the echo signal may be sampled at a second speed based on a medium or low-speed ADC. The second speed may be a medium speed or a low speed. The first speed is greater than the second speed. The number of the first sampling points is greater than the number of the second sampling points. The medium or low-speed ADC may be an ADC with a medium or low-speed sampling frequency, such as a medium-speed sampling frequency of 100 MHz to 500 MHz or a low-speed sampling frequency of less than 100 MHz to 500 MHz, and has fewer sampling points per unit time compared with the high-speed ADC. Taking a 100 MHz medium-speed ADC as an example, $10^8$ sampling points may be generated within 1s. Taking a propagation speed of the laser signal of $3 \times 10^8$ m/s as an example, when the detection distance for the LiDAR 001 is 200 m, the time for the LiDAR 001 to detect emitted light once from emitting of the laser signal to receiving of the echo signal is $1.33 \times 10^{-6}$s. At this time, the 100 MHz medium-speed ADC may generate 133 sampling points within the time for the LiDAR 001 to detect emitted light once. When the detection distance for the LiDAR 001 is 100 m, the time for the LiDAR 001 to detect emitted light once from emitting of the laser signal to receiving of the echo signal is $0.67 \times 10^{-6}$s. At this time, the 100 MHz medium-speed ADC may generate 67 sampling points within the time for the LiDAR 001 to detect emitted light once.

As previously mentioned, to determine the detection threshold, extraction of the noise signal from the echo signal can be beneficial. As shown in Fig. 7, the second mode 2 may further include the following steps.

At 24, the target signal in the multiple second sampling points is determined based on a preset second threshold range, and the target signal in the echo signal is filtered to determine the noise signal. Specifically, in step 24, whether the second sampling point is the target signal may be determined based on an amplitude of the second sampling point.

The second threshold range may be pre-stored in the echo signal detection system 600. The second threshold range may be determined based on an empirical value, a statistical method, or machine learning. In some embodiments, the echo signal detection system 600 may pre-store amplitude information of the pulse signal, and the second threshold range may also be calculated based on the pulse signal. The second threshold range may be a definite threshold, a continuous threshold range, or multiple discontinuous threshold ranges. For ease of description, the second threshold range being a continuous threshold range is used as an example for description. The second threshold range may include a portion between a second threshold upper limit and a second threshold lower limit. The second threshold upper limit is greater than the second threshold lower limit.

In some embodiments, when the amplitude of the second sampling point is outside the second threshold range, in step 24, the second sampling point outside the second threshold range may be determined as the target signal. In some embodiments, to improve the detection accuracy, in step 24, the second sampling point outside the second threshold range may be determined as the target signal, and at least one second sampling point within the second threshold range and near the second threshold upper limit or the second threshold lower limit may also be determined as the target signal. In some embodiments, in step 24, at least one second sampling point within the second threshold range and adjacent to a second sampling point outside the second threshold upper limit may be determined as the target signal. In some embodiments, to improve the detection accuracy, in step 24, a negative pulse signal may also be filtered. Typically, a large pulse signal can generate a sampling waveform that slowly restores from a bottom to a baseline, that is, the negative pulse signal. An amplitude of the negative pulse signal is less than that of the noise signal, and thus filtration of the negative pulse signal by the second threshold lower limit can be beneficial. In step 24, the second sampling point less than the second threshold lower limit may be determined as the target signal and filtered. In some embodiments, in step 24, multiple continuous second sampling points that monotonically increase within the second threshold range and are adjacent to a second sampling point of the second threshold lower limit may also be determined as the target signal.

Fig. 8 shows a schematic diagram of an example second sampling point, consistent with some embodiments of this disclosure. A horizontal axis represents time, and a vertical axis represents amplitude. Typically, an amplitude of a positive pulse signal is greater than that of the noise signal. In such a case, filtration of the positive pulse signal by the second threshold upper limit can be beneficial. In step 24, the second sampling point greater than the second threshold upper limit may be determined as the target signal and filtered, and q second sampling points near the second sampling point greater than the second threshold upper limit may also be used as the target signal and filtered. q may be any positive integer, such as 1, 2, 3, or even larger. The amplitude of the negative pulse signal is less than that of the noise signal, and thus filtration of the negative pulse signal by the second threshold lower limit can be beneficial. In step 24, the second sampling point less than the second threshold lower limit may be determined as the target signal and filtered, and multiple continuous second sampling points that monotonously increase within the second threshold range and are located after the second sampling point less than the second threshold lower limit may also be determined as the target signal and filtered.

As shown in Fig. 8, taking q=2 as an example, when the positive pulse signal is filtered with the second threshold upper limit, if the $n^{th}$ to $(n+m-1)^{th}$ second sampling points all exceed the second threshold upper limit, and the $(n-1)^{th}$ and $(n+m)^{th}$ second sampling points are within the second threshold range, in step 24, the $(n-2)^{th}$, $(n-1)^{th}$, $n^{th}$, ..., and $(n+m+1)^{th}$ second sampling points may all be determined as the target signal and filtered.

As shown in Fig. 8, when the negative pulse signal is filtered with the second threshold lower limit, when the $(n-p)^{th}$ to $n^{th}$ second sampling points are all below the second threshold lower limit, the $(n-p-1)^{th}$ second sampling point is within the second threshold range, the $(n+1)^{th}$ second sampling point is within the second threshold range, the $(n+2)^{th}$ second sampling point is within the second threshold range and is greater than or equal to the $(n+1)^{th}$ second sampling point, the $(n+3)^{th}$ second sampling point is within the second threshold range and is greater than or equal to the $(n+2)^{th}$ second sampling point, and the $(n+m)^{th}$ second sampling point is within the second threshold range and is less than the $(n+m-1)^{th}$ second sampling point, in step 24, the $n^{th}$, $(n+1)^{th}$, $(n+2)^{th}$, $(n+3)^{th}$, ..., and $(n+m)^{th}$ second sampling points may be determined as the target signal and filtered.

In some embodiments, in step 24, the target signal may also be filtered by other means. For example, in step 24, the slope of two adjacent second sampling points in the multiple second sampling points may be calculated. When the slope between any two points in three continuous second sampling points is greater than a preset slope threshold, in step 24, it is determined that the current three second sampling points are all target signals.

As shown in Fig. 7, the second mode 2 may further include the following steps.

At 26, a standard deviation of a second sampling point corresponding to the noise signal is used as the standard deviation of the noise signal.

The larger the number of second sampling points contained in the noise signal is, the higher the accuracy of the standard deviation of the noise signal is. When the number of second sampling points contained in the noise signal is greater than a preset threshold, the standard deviation of the noise signal is determined based on the second sampling points contained in the noise signal. When the number of second sampling points contained in the noise signal is less than the preset threshold, the standard deviation of the noise signal is set to a default value.

For ease of description, the standard deviation of the noise signal generated in the second mode 2 is marked as $\sigma_2$.

It can be seen from the above description that in the first mode 1, sampling is performed at the first speed to determine a larger number of first sampling points. When the number of sampling points is sufficient, the accuracy of calculating the standard deviation of the noise signal in a manner of moving the target window by the moving step length is higher. However, in the second mode 2, the number of second sampling points determined by sampling at the second speed is small, which is not enough to calculate the standard deviation of the noise signal in a manner of moving the target window by the moving step length. In such a case, the accuracy of calculating the standard deviation of the noise signal by using an overall calculation method is higher.

As shown in Fig. 3, step 160 may further include the following steps.

At 164, a standard deviation of the noise signal is determined based on the target mode.

For specific content in step 164, reference may be made to specific content in the first mode 1 and the second mode 2, and repeated description will not be provided herein.

As shown in Fig. 3, step 160 may further include the following steps.

At 168, the detection threshold is generated based on the mean value and the standard deviation of the noise signal.

Specifically, step 168 may include: determining the detection threshold $\eta$ based on the mean value $\mu$ and the standard deviation $\sigma$ of the noise signal and a preset false alarm probability so that a probability that the noise signal exceeds the detection threshold $\eta$ is less than the false alarm probability. In some embodiments, the false alarm probability may also be a probability of the noise signal greater than the detection threshold in the noise signals. As previously mentioned, in step 160 of the method P100, the mean value and the standard deviation of the noise signal may be outputted. A formula for the detection threshold $\eta$ may be represented as $\eta = \mu + b\sigma$. When the target mode is the first mode 1, $\mu = \mu_1$, $\sigma = \sigma_1$. When the target mode is the second mode 2, $\mu = \mu_2$, $\sigma = \sigma_2$. b is a multiple of the standard deviation. The value of b is related to the false alarm probability. The higher the false alarm probability is, the smaller the value of b is; or the lower the false alarm probability is, the larger the value of b is. In step 160, the echo signal detection system 600 may determine the specific value of b in combination with a normal distribution probability table based on the preset false alarm probability.

In some embodiment, as shown in Fig. 3, before step 168, step 160 may further include the following steps.

At 166, a detection threshold level corresponding to the working environment parameter is determined based on the working environment parameter, to determine a false alarm probability corresponding to the detection threshold level.

As previously mentioned, the detection threshold level is related to the false alarm probability, and the working environment parameter is positively correlated with the detection threshold level. The echo signal detection system 600 may determine the detection threshold level corresponding to the working environment parameter based on the working environment parameter to determine the value of a false alarm probability corresponding to the detection threshold level, and may determine the specific value of b in combination with the normal distribution probability table. The echo signal detection system 600 may pre-store a corresponding relationship among the working environment parameter, the detection threshold level, and the false alarm probability.

As shown in Fig. 2, the method P100 may further include the following steps.

At 180, the echo signal is compared with the detection threshold, and a target signal reflected from a target object in the echo signal is outputted.

Step 180 may include: using a signal in the echo signal that exceeds the detection threshold as the target signal and outputting the signal.

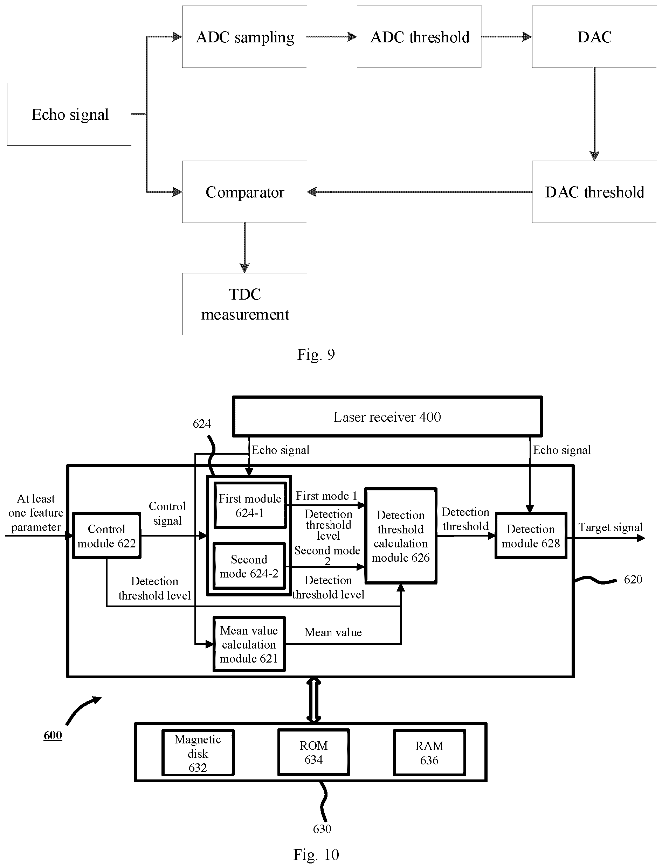

It is to be noted that in some embodiments, the way of comparing the echo signal with the detection threshold in step 180 may be different. In some embodiments, step 180 may include: directly comparing the sampling point of the echo signal collected by an ADC sampler with the detection threshold. At this time, in step 180, the sampling point may be directly compared with the detection threshold. In some embodiments, in step 180, the echo signal may be compared with the detection threshold based on a comparator. At this time, in step 180, it can be beneficial for the echo signal to be sampled by the comparator and compared with the detection threshold. A signal used during comparison of the comparator is a voltage signal, and a signal used during calculation of the detection threshold is an ADC signal. In such a case, it can be beneficial for generating the voltage signal based on the detection threshold and then inputting the voltage signal to the comparator for comparison. Due to the impact of device difference and temperature variation between the ADC and the comparator, it can be beneficial for updating calibration values in real time during unit conversion to ensure correct settings. For ease of description, a detection threshold of the ADC signal is marked as an ADC threshold, and a threshold after generation of a voltage signal based on the ADC threshold is marked as a DAC threshold. Fig. 9 shows a schematic diagram of an example threshold calibration, consistent with some embodiments of this disclosure. As shown in Fig. 9, the echo signal is divided into two paths, one path is directly subjected to ADC sampling, and the other path enters the comparator. After being outputted by ADC sampling, the ADC threshold enters a DAC, the DAC performs statistics, configuration, and threshold conversion to output the DAC threshold, and then the DAC threshold enters the other end of the comparator and is compared with the echo signal to achieve threshold calibration. The comparator outputs a signal after comparison between the echo signal and the DAC threshold to a time-to-digital converter ("TDC"), and the TDC determines digitized time information based on the signal outputted by the comparator.

In summary, according to the dynamic threshold based echo signal detection method P100 provided in this disclosure, the detection threshold can be determined based on the feature parameter and the noise signal of the LiDAR 001, and methods for determining the detection threshold in different modes may be selected under different feature parameters to improve the accuracy of the detection threshold for the echo signal. In such a case, the detection probability and accuracy of echo signal detection can be improved.

This disclosure further provides an echo signal detection system 600, which is configured to execute the dynamic threshold based echo signal detection method P100 provided in this disclosure. Specifically, the echo signal detection system is configured to:

determine at least one feature parameter that represents a working condition of the LiDAR;
determine an echo signal collected by the LiDAR, the echo signal including at least a noise signal;
select a processing mode for the echo signal based on the at least one feature parameter, detect the noise signal in the processing mode, and adjust a detection threshold; and
compare the echo signal with the detection threshold, and output a target signal reflected from a target object in the echo signal.

Fig. 10 shows an exemplary schematic hardware diagram of an example echo signal detection system 600, consistent with some embodiments of this disclosure. As shown in Fig. 10, the echo signal detection system 600 may include at least one storage medium 630 and at least one processor 620.

The storage medium 630 may include a data storage device. The data storage device may be a non-temporary storage medium or a temporary storage medium. For example, the data storage device may include one or more of a magnetic disk 632, a read-only memory ("ROM") 634 or a random access memory ("RAM") 636. The storage medium 630 further includes at least one instruction set stored in the data storage device. The at least one instruction set is configured to execute a dynamic threshold based echo signal detection method P100. The instructions are computer program codes. The computer program codes may include programs, routines, objects, components, data structures, processes, modules, or the like that execute the dynamic threshold based echo signal detection method P100 provided in this disclosure.

The at least one processor 620 may be communicatively connected to at least one storage medium 630 and a communication port 650 by an internal communication bus 610. The at least one processor 620 is configured to execute the at least one instruction set mentioned above. When the echo signal detection system 600 operates, the at least one processor 620 reads the at least one instruction set and executes the dynamic threshold based echo signal detection method P100 provided in this disclosure based on instructions of the at least one instruction set. The processor 620 may execute all steps included in the dynamic threshold based echo signal detection method P100. The processor 620 may be in the form of one or more processors. In some embodiments, the processor 620 may include one or more hardware processors, such as a microcontroller, a microprocessor, a reduced instruction set computer ("RISC"), an application specific integrated circuit ("ASIC"), an application specific instruction set processor ("ASIP"), a central processing unit ("CPU"), a graphics processing unit ("GPU"), a physical processing unit ("PPU"), a microcontroller unit, a digital signal processor ("DSP"), a field programmable gate array ("FPGA"), an advanced RISC machine ("ARM"), a programmable logic device ("PLD"), any circuit or processor capable of executing one or more functions, or any combination thereof. For illustrative purposes only, only one processor 620 is described in the echo signal detection system 600 in this disclosure. However, it should be noted that the echo signal detection system 600 in this disclosure may further include multiple processors. In such a case, the operations and/or method steps disclosed in this disclosure may be executed by one processor as described in this disclosure, or may be jointly executed by multiple processors. For example, if the processor 620 of the echo signal detection system 600 executes step A and step B in this disclosure, it can be understood that step A and step B may also be jointly or separately executed by two different processors 620 (e.g., a first processor executes step A, a second processor executes step B, or the first and second processors jointly execute steps A and B).

In some embodiments, the processor 620 may include a mean value calculation module 621, a control module 622, a standard deviation calculation module 624, a detection threshold calculation module 626, and a detection module 628.

The mean value calculation module 621 is configured to calculate a mean value of a noise signal based on the echo signal during operation.

In some embodiments, the control module 622 is configured to generate, based on at least one feature parameter of a LiDAR 001, a control signal corresponding to the at least one feature parameter during operation. The control signal may include a first control signal or a second control signal. The first control signal corresponds to a first mode 1. The second control signal corresponds to a second mode 2. The control module 622 may further select a target mode corresponding to the control signal based on the control signal. When the control signal is the first control signal, the control module 622 selects the first mode 1. When the control signal is the second control signal, the control module 622 selects the second mode 2. The control signal may be any form of signal. For example, the first control signal may be a signal "1", and the second control signal may be a signal "2". For another example, the first control signal may be a signal "01", and the second control signal may be a signal "02".

In some embodiments, the control module 622 may also be configured to generate a detection threshold level corresponding to the at least one feature parameter based on the at least one feature parameter during operation. The detection threshold level is negatively correlated with a false alarm probability. That is, the higher the false alarm probability is, the lower the detection threshold level is; or the lower the false alarm probability is, the higher the detection threshold level is. When the noise signal is determined, the higher the detection threshold level is, the higher the detection threshold is, the lower the corresponding false alarm probability is, and the lower the probability of detecting the noise signal as the target signal is; or the lower the detection threshold level is, the lower the detection threshold is, the higher the corresponding false alarm probability is, and the higher the probability of detecting the noise signal as the target signal is.

In some embodiments, the standard deviation calculation module 624 may be configured to receive the control signal and the echo signal outputted by the control module 622 and process the echo signal in the target mode based on the control signal to determine the noise signal in the echo signal and a standard deviation of the noise signal during operation. The standard deviation calculation module 624 may include a first module 624-1 and a second module 624-2. The first module 624-1 corresponds to the first mode 1. The second module 624-2 corresponds to the second mode 2. When the control signal is the first control signal, the target mode is the first mode 1, and the standard deviation calculation module 624 processes the echo signal in the first mode 1 in the first module 624-1. When the control signal is the second control signal, the target mode is the second mode 2, and the standard deviation calculation module 624 processes the echo signal in the second mode 2 in the second module 624-2.

In some embodiments, the detection threshold calculation module 626 may be configured to receive the mean value and the standard deviation of the noise signal outputted by the mean value calculation module 621 and the standard deviation calculation module 624 during operation. After receiving the mean value and the standard deviation of the noise signal, the detection threshold calculation module 626 may output the detection threshold by a detection threshold formula based on the mean value, the standard deviation, and the preset false alarm probability. In some embodiments, the detection threshold calculation module 626 may also be configured to receive the detection threshold level outputted by the control module 622 during operation. In some embodiments, the detection threshold calculation module 626 may calculate the detection threshold based on the mean value and the standard deviation of the noise signal, and the detection threshold level during operation.

In some embodiments, the detection module 628 may be configured to receive the detection threshold outputted by the detection threshold calculation module 626 and the echo signal, compare the echo signal with the detection threshold, and output the target signal in the echo signal during operation.

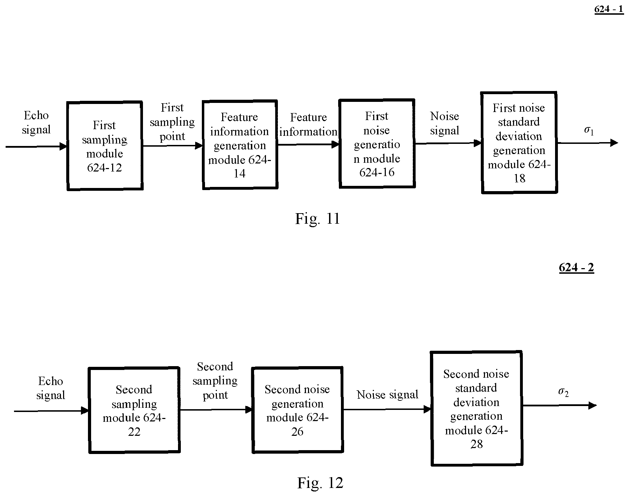

Fig. 11 shows a schematic diagram of an example first module 624-1, consistent with some embodiments of this disclosure. As shown in Fig. 11, the first module 624-1 may include a first sampling module 624-12, a feature information generation module 624-14, a first noise generation module 624-16, and a first noise standard deviation generation module 624-18.

The first sampling module 624-12 may be configured to sample the echo signal to generate multiple first sampling points during operation. The first sampling module 624-12 may be a high-speed ADC.

The feature information generation module 624-14 may be configured to set a length and a moving step length of a target window based on the multiple first sampling points outputted by the first sampling module 624-12 and perform signal processing on the multiple first sampling points in a manner of moving the target window by the moving step length to determine feature information of the first sampling point in each target window.

The first noise generation module 624-16 may be configured to filter the target signal in the echo signal based on the feature information outputted by the feature information generation module 624-14 to determine the noise signal during operation.

The first noise standard deviation generation module 624-18 may be configured to generate the standard deviation of the noise signal based on the noise signal during operation.

Fig. 12 shows a schematic diagram of an example second module 624-2, consistent with some embodiments of this disclosure. As shown in Fig. 12, the second module 624-2 may include a second sampling module 624-22, a second noise generation module 624-26, and a second noise standard deviation generation module 624-28.

The second sampling module 624-22 may be configured to sample the echo signal to generate multiple second sampling points during operation. In some embodiments, the second sampling module 624-22 may be a medium or low-speed ADC.

The second noise generation module 624-26 may be configured to determine the target signal in the multiple second sampling points based on the multiple second sampling points outputted by the second sampling module 624-22 and filter the target signal in the echo signal to determine the noise signal during operation.

The second noise standard deviation generation module 624-28 may be configured to generate the standard deviation of the noise signal based on the noise signal during operation.

Another aspect of this disclosure provides a non-temporary storage medium storing at least one set of executable instructions for detecting an echo signal based on a dynamic threshold. When executed by a processor, the executable instructions guide the processor to implement steps of the dynamic threshold based echo signal detection method P100 according to this disclosure. In some possible embodiments, various aspects of this disclosure may also be implemented in the form of a program product including program codes. When running in an echo signal detection system 600, the program product is configured to cause the echo signal detection system 600 to execute steps of the dynamic threshold based echo signal detection method described in this disclosure. The program product for implementing the above method may be a portable compact disc read-only memory ("CD-ROM") that includes a program code, and may be run on the echo signal detection system 600. However, the program product in this disclosure is not limited thereto. In this disclosure, the readable storage medium may be any tangible medium containing or storing a program that may be used by or in combination with an instruction execution system (e.g., the processor 620). The program product may be any combination of one or more readable media. The readable medium may be a readable signal medium or a readable storage medium. The readable storage medium may be, for example, but not limited to, electric, magnetic, optical, electromagnetic, infrared, or semiconductor systems, apparatuses, or devices, or any combination thereof. A more specific example of the readable storage medium includes an electrical connection with one or more leads, a portable disk, a hard disk, a random access memory ("RAM"), a read-only memory ("ROM"), an erasable programmable read-only memory ("EPROM" or a flash memory), a fiber optic, a portable compact disc read-only memory ("CD-ROM"), an optical storage device, a magnetic storage device, or any suitable combination thereof. The computer-readable storage medium may include a data signal propagated in a baseband or as a part of a carrier, the data signal carrying a readable program code. The propagated data signal may be in various forms, including but not limited to an electromagnetic signal, an optical signal, or any suitable combination thereof. The readable storage medium may also be any readable medium other than the readable storage medium. The readable medium can send, propagate, or transmit a program used by or in combination with an instruction execution system, apparatus, or device. The program code contained in the readable storage medium may be transmitted by any suitable medium, including but not limited to a wireless medium, a wired medium, a fiber optic cable, a radio frequency ("RF"), or any suitable combination thereof. The program code for performing the operation in this disclosure can be written in any combination of one or more programming languages. The programming languages include object-oriented programming languages such as Java and C++, and further include conventional procedural programming languages such as "C" language or similar programming languages. The program code may be completely executed on the echo signal detection system 600, partially executed on the echo signal detection system 600, executed as an independent software package, partially executed on the echo signal detection system 600 and partially executed on a remote computing device, or completely executed on the remote computing device.

The specific embodiments of this disclosure are described above. Other embodiments are within the scope of the appended claims. In some cases, the actions or steps described in the claims may be performed in a different order than in the embodiments and can still achieve the desired results. Additionally, the processes depicted in the drawings are not necessarily required to be shown in a specific or continuous order to achieve the desired results. In some embodiments, multitasking and parallel processing are also possible or may be advantageous.

In summary, after reading this detailed disclosure, those skilled in the art can understand that the aforementioned detailed disclosure may be presented by way of example only and may not be limiting. Although not explicitly stated herein, it can be understood by those skilled in the art that the requirements of this disclosure encompass various reasonable changes, improvements, and modifications to embodiments. These changes, improvements, and modifications are intended to be proposed in this disclosure and are within the spirit and scope of exemplary embodiments of this disclosure.

In addition, some terms in this disclosure have been used to describe embodiments of this disclosure. For example, at least one of "one embodiment," "embodiments," or "some embodiments" means that specific features, structures, or characteristics described in conjunction with the embodiments may be included in at least one embodiment of this disclosure. In such a case, it can be emphasized and understood that two or more references to "embodiments," "one embodiment," or "alternative embodiments" in various parts of this disclosure do not necessarily refer to the same embodiment. In addition, specific features, structures, or characteristics may be appropriately combined in one or more embodiments of this disclosure.

It can be understood that in the aforementioned description of embodiments of this disclosure, to assist in understanding one feature and for the purpose of simplifying this disclosure, various features in this disclosure are combined in a single embodiment, drawings, or description thereof. However, this does not mean that the combination of these features is necessary. It is entirely possible for those skilled in the art to label some of the devices as separate embodiments for understanding when reading this disclosure. That is to say, embodiments in this disclosure can also be understood as integration of multiple secondary embodiments. The content of each secondary embodiment is also valid when it is less than all features of a single previously disclosed embodiment.

Each patent, patent application, publication of the patent application, and other materials cited herein, such as articles, books, specifications, publications, documents, and items, may be incorporated herein by reference. All content is intended for all purposes, except for any related prosecution document history that may be any same prosecution document history inconsistent or conflicting with this document, or any same prosecution document history with a limiting effect on the broadest scope of the claims. This document is associated now or later. For example, if there is any inconsistency or conflict between at least one of description, definition, or use of terms associated with any of the materials included and at least one of terms, description, definition, or use related to this document, the terms in this document are used as standard.

Finally, it can be understood that embodiments of the application in this disclosure illustrate the principles of embodiments of this disclosure. Other modified embodiments are also within the scope of this disclosure. In such a case, the embodiments of this disclosure are merely examples and not limitations. Those skilled in the art may use alternative configurations based on the embodiments in this disclosure to implement the application in this disclosure. In such a case, the embodiments of this disclosure are not limited to the embodiments precisely described in the application.

## Claims

1. A dynamic threshold based echo signal detection method, applied to a LiDAR, and comprising:

   determining at least one feature parameter that represents a working condition of the LiDAR;
   determining an echo signal collected by the LiDAR, wherein the echo signal comprises at least a noise signal;
   selecting a processing mode for the echo signal based on the at least one feature parameter, detecting the noise signal in the processing mode, and adjusting a detection threshold; and
   comparing the echo signal with the detection threshold, and outputting a target signal reflected from a target object in the echo signal.

2. The dynamic threshold based echo signal detection method according to claim 1, wherein the at least one feature parameter comprises at least one of a perpendicular direction detection angle, a detection distance, or a sampling rate.

3. The dynamic threshold based echo signal detection method according to claim 2, wherein the selecting a processing mode for the echo signal based on the at least one feature parameter, detecting the noise signal in the processing mode, and adjusting a detection threshold comprises:

   determining a mean value of the noise signal;
   selecting one of a preset first mode or second mode as a target mode based on the at least one feature parameter;
   determining a standard deviation of the noise signal based on the target mode; and
   generating the detection threshold based on the mean value and the standard deviation of the noise signal.

4. The dynamic threshold based echo signal detection method according to claim 3, wherein the first mode comprises:

   sampling the echo signal at a first speed to determine a plurality of first sampling points;
   setting a length and a moving step length of a target window, and moving the target window by the moving step length to sequentially perform signal processing on the plurality of first sampling points to determine feature information of the first sampling point in each target window;
   filtering the target signal in the echo signal based on the feature information to determine the noise signal; and

determining the standard deviation of the noise signal.

5. The dynamic threshold based echo signal detection method according to claim 4, wherein the feature information comprises statistical information of amplitude information, and the statistical information of the amplitude information comprises at least one of a mean value, an entropy, a variance, a standard deviation, or a standard deviation of the standard deviation of the amplitude information.

6. The dynamic threshold based echo signal detection method according to claim 4, wherein the filtering the target signal in the echo signal based on the feature information to determine the noise signal comprises:

   determining, as the target signal, a first sampling point in the target window where the feature information exceeds a preset first threshold range; and
   removing the target signal from the echo signal to determine the noise signal.

7. The dynamic threshold based echo signal detection method according to claim 4, wherein the determining the standard deviation of the noise signal comprises:

   determining a standard deviation of the first sampling point in each target window corresponding to the noise signal; and
   using a standard deviation involving a maximum number of target windows as the standard deviation of the noise signal.

8. The dynamic threshold based echo signal detection method according to claim 3, wherein the second mode comprises:

   sampling the echo signal at a second speed to determine a plurality of second sampling points;
   determining the target signal in the plurality of second sampling points based on a preset second threshold range, and filtering the target signal in the echo signal to determine the noise signal; and
   determining the standard deviation of the noise signal.

9. The dynamic threshold based echo signal detection method according to claim 8, wherein the determining the target signal in the plurality of second sampling points based on a preset second threshold range comprises: determining a second sampling point outside the second threshold range as the target signal.

10. The dynamic threshold based echo signal detection method according to claim 9, wherein the second threshold range has a second threshold upper limit and a second threshold lower limit, and the determining the target signal in the plurality of second sampling points based on a preset second threshold range further comprises:
    determining at least one second sampling point within the second threshold range and adjacent to a second sampling point of the second threshold upper limit as the target signal.

11. The dynamic threshold based echo signal detection method according to claim 9, wherein the second threshold range has a second threshold upper limit and a second threshold lower limit, and the determining the target signal in the plurality of second sampling points based on a preset second threshold range further comprises:
    determining, as the target signal, a plurality of continuous second sampling points that monotonically increase within the second threshold range and are adjacent to a second sampling point of the second threshold lower limit.

12. The dynamic threshold based echo signal detection method according to claim 8, wherein the determining the standard deviation of the noise signal comprises:
    using a standard deviation of a second sampling point corresponding to the noise signal as the standard deviation of the noise signal.

13. The dynamic threshold based echo signal detection method according to claim 3, wherein the selecting one of a preset first mode or second mode as a target mode based on the at least one feature parameter comprises:

    when it is determined that the at least one feature parameter meets a first preset condition, using the first mode as the target mode; or
    when it is determined that the at least one feature parameter does not meet the first preset condition, using the second mode as the target mode,
    wherein the first preset condition comprises at least one of the following situations:

       the perpendicular direction detection angle corresponding to the echo signal is within an angle threshold range;
       a current detectable distance of the LiDAR exceeds a distance threshold; or
       the sampling rate of the echo signal exceeds a sampling rate threshold.

**14.** The dynamic threshold based echo signal detection method according to claim 3, wherein the generating the detection threshold based on the mean value and the standard deviation of the noise signal comprises: determining the detection threshold based on the mean value and the standard deviation of the noise signal, and a preset false alarm probability so that a probability that the noise signal exceeds the detection threshold is less than the false alarm probability.

**15.** The dynamic threshold based echo signal detection method according to claim 14, wherein the at least one feature parameter further comprises a working environment parameter that represents a state of an environment where the LiDAR is located during operation.

**16.** The dynamic threshold based echo signal detection method according to claim 15, wherein the selecting a processing mode for the echo signal based on the at least one feature parameter, detecting the noise signal in the processing mode, and adjusting a detection threshold further comprises: determining a detection threshold level corresponding to the working environment parameter based on the working environment parameter, to determine a false alarm probability corresponding to the detection threshold level.

**17.** The dynamic threshold based echo signal detection method according to claim 4, wherein the determining a mean value of the noise signal comprises:

determining a mean value of the first sampling point in each target window corresponding to the noise signal; and using a mean value involving a maximum number of target windows as the mean value of the noise signal.

**18.** The dynamic threshold based echo signal detection method according to claim 3, wherein the determining a mean value of the noise signal comprises:

determining the mean value of the noise signal in each detection channel separately; and using an average value of mean values of noise signals in all detection channels in a same column/row as a mean value of the noise signals in all the detection channels in the current column.

**19.** The dynamic threshold based echo signal detection method according to claim 1, wherein the comparing the echo signal with the detection threshold, and outputting a target signal reflected from a target object in the echo signal comprises: using a signal in the echo signal that exceeds the detection threshold as the target signal and outputting the signal.

**20.** A dynamic threshold based echo signal detection system, comprising:

at least one storage medium storing at least one instruction set for detecting an echo signal based on a dynamic threshold; and at least one processor communicatively connected to the at least one storage medium, wherein when the dynamic threshold based echo signal detection system operates, the at least one processor reads the at least one instruction set and implements the dynamic threshold based echo signal detection method according to any one of claims 1 to 19.

**21.** A LiDAR, comprising:

a laser emitter that emits a laser signal outwards during operation; a laser receiver that receives an echo signal reflected from a target object during operation, wherein the echo signal comprises a noise signal; and the dynamic threshold based echo signal detection system according to claim 20, wherein the system is communicatively connected to the laser receiver during operation.

Fig. 1

P100

Determine at least one feature parameter of LiDAR, at least one feature parameter representing working condition of LiDAR — S120

Determine echo signal collected by LiDAR, echo signal including at least noise signal — S140

Generate detection threshold based on at least one feature parameter and noise signal — S160

Compare echo signal with detection threshold, and output target signal reflected from target object in echo signal — S180

Fig. 2

**S160**

Determine mean value of noise signal — S161

When it is determined that at least one feature parameter meets first preset condition, use first mode as target mode — S162-2

When it is determined that at least one feature parameter does not meet first preset condition, use second mode as target mode — S162-4 / S162

Determine standard deviation of noise signal based on target mode — S164

Determine detection threshold level corresponding to working environment parameter based on working environment parameter, to determine false alarm probability corresponding to detection threshold level — S166

Generate detection threshold based on mean value and standard deviation of noise signal — S168

Fig. 3

1

| Sample echo signal to determine multiple first sampling points | S12 |

| Set length and moving step length of target window, and sequentially perform signal processing on multiple first sampling points to determine feature information of first sampling point in each target window | S14 |

| Determine, as target signal, first sampling point in target window where feature information exceeds preset first threshold range | S16-2 |

S16

| Remove target signal from echo signal to determine noise signal | S16-4 |

| Determine standard deviation of first sampling point in each target window corresponding to noise signal | S18-2 |

S18

| Use standard deviation involving maximum number of target windows as standard deviation of noise signal | S18-6 |

Fig. 4

Fig. 5

Fig. 6

2

| Sample echo signal to determine multiple second sampling points | S22 |

| Determine target signal in multiple second sampling points based on preset second threshold range, and filter target signal in echo signal to determine noise signal | S24 |

| Use standard deviation of second sampling point corresponding to noise signal as standard deviation of noise signal | S26 |

Fig. 7

Fig. 8

Echo signal → ADC sampling → ADC threshold → DAC

Echo signal → Comparator ← DAC threshold ← DAC

Comparator → TDC measurement

Fig. 9

Laser receiver 400

624

Echo signal | Echo signal

At least one feature parameter → Control module 622

Control signal → First module 624-1 → First mode 1

Detection threshold level
Second mode 624-2 → Second mode 2

Detection threshold calculation module 626 → Detection threshold → Detection module 628 → Target signal

Detection threshold level

Detection threshold level

Mean value calculation module 621 → Mean value

620

600

Magnetic disk 632 | ROM 634 | RAM 636

630

Fig. 10

624 - 1

Echo signal → First sampling module 624-12 → First sampling point → Feature information generation module 624-14 → Feature information → First noise generation module 624-16 → Noise signal → First noise standard deviation generation module 624-18 → $\sigma_1$

Fig. 11

624 - 2

Echo signal → Second sampling module 624-22 → Second sampling point → Second noise generation module 624-26 → Noise signal → Second noise standard deviation generation module 624-28 → $\sigma_2$

Fig. 12

| INTERNATIONAL SEARCH REPORT | International application No. |
|---|---|
| | **PCT/CN2023/077001** |

**A. CLASSIFICATION OF SUBJECT MATTER**

G01S7/48(2006.01)i

According to International Patent Classification (IPC) or to both national classification and IPC

**B. FIELDS SEARCHED**

Minimum documentation searched (classification system followed by classification symbols)

IPC: G01S

Documentation searched other than minimum documentation to the extent that such documents are included in the fields searched

Electronic data base consulted during the international search (name of data base and, where practicable, search terms used)

CNTXT; ENTXT; CNKI; VEN; USTXT; EPTXT; WOTXT; IEEE: 动态, 调整, 调节, 自适应, 阈值, 门限, 虚警, 回波, 处理, 噪声, 距离, 角度, 采样率, 探测, 均值, 标准差, 方差, 激光雷达, 工作, 特征, 模式, 方式, 对比, 比较, LIDAR, detect, dynamic, adjust, threshold, noise, distance, angle, sampl+, mode, compare, average, variance, deviation

**C. DOCUMENTS CONSIDERED TO BE RELEVANT**

| Category* | Citation of document, with indication, where appropriate, of the relevant passages | Relevant to claim No. |
|---|---|---|
| A | CN 112789522 B (HUAWEI TECHNOLOGIES CO., LTD.) 25 March 2022 (2022-03-25) description, paragraphs [0005]-[0048] | 1-21 |
| A | CN 113359145 A (ZHENGZHOU UNIVERSITY OF AERONAUTICS et al.) 07 September 2021 (2021-09-07) entire document | 1-21 |
| A | CN 112585494 A (SUTENG INNOVATION TECHNOLOGY CO., LTD.) 30 March 2021 (2021-03-30) entire document | 1-21 |
| A | CN 108279407 A (SUZHOU LEITU PHOTOELECTRIC TECHNOLOGY CO., LTD.) 13 July 2018 (2018-07-13) entire document | 1-21 |
| A | CN 114217315 A (CHANGCHUN UNIVERSITY OF SCIENCE AND TECHNOLOGY) 22 March 2022 (2022-03-22) entire document | 1-21 |

☑ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **19 May 2023** | **02 June 2023** |

| Name and mailing address of the ISA/CN | Authorized officer |
|---|---|
| **China National Intellectual Property Administration (ISA/CN) China No. 6, Xitucheng Road, Jimenqiao, Haidian District, Beijing 100088** | |
| | Telephone No. |

Form PCT/ISA/210 (second sheet) (July 2022)

<table>
<tr><td colspan="3" style="text-align:center">**INTERNATIONAL SEARCH REPORT**</td><td>International application No.<br><br>**PCT/CN2023/077001**</td></tr>
</table>

| C. | DOCUMENTS CONSIDERED TO BE RELEVANT | | |
|---|---|---|---|
| Category* | Citation of document, with indication, where appropriate, of the relevant passages | | Relevant to claim No. |
| A | CN 112219135 A (SZ DJI TECHNOLOGY CO., LTD.) 12 January 2021 (2021-01-12)<br>entire document | | 1-21 |

<table>
<tr><td colspan="2" align="center">**INTERNATIONAL SEARCH REPORT**<br>**Information on patent family members**</td><td>International application No.<br><br>**PCT/CN2023/077001**</td></tr>
</table>

| Patent document<br>cited in search report | | | Publication date<br>(day/month/year) | Patent family member(s) | | | Publication date<br>(day/month/year) |
|---|---|---|---|---|---|---|---|
| CN | 112789522 | B | 25 March 2022 | CN | 112789522 | A | 11 May 2021 |
| CN | 113359145 | A | 07 September 2021 | | None | | |
| CN | 112585494 | A | 30 March 2021 | | None | | |
| CN | 108279407 | A | 13 July 2018 | | None | | |
| CN | 114217315 | A | 22 March 2022 | | None | | |
| CN | 112219135 | A | 12 January 2021 | | None | | |

Form PCT/ISA/210 (patent family annex) (July 2022)